# EUROPÄISCHE PATENTSCHRIFT

(11) **EP 0 289 739 B1**
(45) Veröffentlichungstag und Bekanntmachung des Hinweises auf die Patenterteilung: **30.11.1994**
(21) Anmeldenummer: 88103749.3
(22) Anmeldetag: 09.03.1988
(51) Int. Cl.: A61C 5/10

(54) **Dentalkappe zur Verwendung bei der Herstellung von Verbundkronen**
Dental cap for use in the production of composite crowns
Capuchon dentaire utilisé lors de la fabrication de couronnes composées

(30) Priorität: 06.05.1987 DE 3715096
(43) Veröffentlichungstag der Anmeldung: 09.11.1988
(73) Patentinhaber: Wunderle, Anita, geb. Rudigier, D-79713 Bad Säckingen (DE); Frank, Michael, D-79639 Grenzach-Wyhlen (DE); Schössow, Dieter, D-79639 Grenzach-Wyhlen (DE)
(72) Erfinder: Wunderle, Anita, geb. Rudigier, D-79713 Bad Säckingen (DE); Frank, Michael, D-79639 Grenzach-Wyhlen (DE); Schössow, Dieter, D-79639 Grenzach-Wyhlen (DE)

(56) Entgegenhaltungen:
- EP-A- 0 104 320
- EP-A- 0 202 431
- EP-A- 0 283 858

## Beschreibung

Die Erfindung betrifft eine Dentalkappe zur Verwendung als Träger für die Verblendung einer Verbundkrone gemäß Oberbegriff des Anspruchs 1.

Bekannt ist bereits eine Dentalkappe aus einer Edelmetall-Folie in im wesentlichen zylindrischer oder zylindrisch-kegelstumpfförmiger Gestalt, die ausgehend von einem kreisförmigen Folienstück durch Umbiegen des äußeren Bereichs desselben in Richtung auf die Drehachse des Folienstücks unter Ausbildung von gegenseitigen Überlappungen gebildet ist, wobei die Überlappungsbereiche miteinander unlösbar verbunden sind.

Mit Ausnahme des Zentralbereichs des kreisförmigen Folienstücks ist diese Kappe ziehharmonikaförmig vorgefaltet und dabei zugleich in Richtung auf die Drehachse des Folienstücks umgebogen, so daß der äußere Bereich der Kappe in seinem Aussehen etwa einem halbaufgespannten Regenschirm entspricht. Die so vorgeformte Kappe wird später vom Zahntechniker auf ein Zahnstumpfmodell, das den Gegebenheiten eines Patienten entspricht, aufgesetzt, im Zentralbereich radial gegen das Zahnstumpfmodell gedrückt und so festgehalten unter gleichzeitigem Anrollen der ziehharmonikaförmigen Faltung des äußeren Bereichs gegen die Außenfläche des Zahnstumpfmodells, was etwa dem weiteren Schließen eines Regenschirms und Herumwickeln um den Stock des Regenschirms entpricht. In Hinblick auf die genaue Anpassung der Dentalkappe an das Zahnstumpfmodell muß beim Zusammenfalten der ziehharmonikaförmigen Faltung und dem Anrollen gegen die Außenfläche des Zahnstumpfmodells sehr genau gearbeitet werden. Diese Arbeit ist im übrigen nur manuell vom Zahntechniker ausführbar, somit verhältnismaßig zeit- und damit kostenaufwendig. Darüber hinaus erfordert das Anrollen der Folie gegen das Zahnstumpfmodell eine große Geschicklichkeit vom Zahntechniker, damit nicht durch an sich unbeabsichtigte Querfalten oder dergleichen lokale Unregelmäßigkeiten in der Wandstärke der Kappe auftreten, die sich selbst bei anschließendem Einsatz der angerollten Kappe in einen sogenannten Swager nicht egalisieren lassen. Solche unbeabsichtigten Querfaltungen können Lufteinschlüsse enthalten, die sich bei der Nachbehandlung in einer Flamme zur Erreichung einer unlösbaren gegenseitigen Fixierung einander überlappender Bereiche der Folie nicht mit Flüssiggold füllen lassen.

Aus der gattungsgemäßen EP-A-0 104 320 ist eine Jacket-Krone mit einem inneren Bereich und einem äußeren Bereich mit Falten bekannt, wobei die Falten während des Ausformungsvorganges für die Krone ausgebildet werden und einander im ausgeformten Zustand überlappen. Die Krone wird mit dem gefalteten Bereich an einen Abdruck des zu überkronenden Zahnes angeformt und danach hitzebehandelt. Wegen der durch die Falten entstehenden großen Überlappungszonen ist eine solche Krone jedoch sehr materialaufwendig und weist zudem aufgrund der teilweisen sehr großen Wanddicken Verspannungen auf, die die bekannte Krone nachteilig beeinflussen und bei empfindsamen Personen sogar zu Zahnschmerzen führen können.

Im Hinblick auf eine schnellere und preiswertere Herstellbarkeit ausgehend von der vorstehend beschriebenen Dentalkappe, wobei insbesondere keine überhohen Anforderungen an die Geschicklichkeit des verarbeitenden Zahntechnikers zu stellen sind, ist in der älteren europäischen Patentanmildung EP-A-0 283 858, das aber nur im Einklang mit Art. 54 (3) (4) EPÜ gilt, vorgeschlagen worden, daß der äußere Bereich des Folienstücks in mindestens zwei flügelförmige Lappen unterteilt ist, wobei einander benachbarte Lappen in einem solchen Abstand vom Zentrum des Folienstucks miteinander in Verbindung stehen, der mindestens dem halben Durchmesser der Kappenoberseite entspricht. Die solchermaßen ausgebildete Dentalkappe läßt sich zwar preiswert und einfach herstellen, und zwar tatsächlich ohne eine besondere Geschicklichkeit des verarbeitenden Zahntechnikers erforderlich zu machen; da jedoch die Endpunkte der beiden zwei benachbarte Lappenseiten begrenzenden Einschnitte zusammenfallen, also diese beiden Einschnitte in einem einzigen Punkt enden, besteht die Gefahr, daß beim Umbiegen der Lappen kleine Bereiche der Dentalkappe noch offen sind. Diese offenen Bereiche, so klein sie sein mögen, bieten bei der gegenseitig unlösbaren Fixierung der Überlappungsbereiche durch Aufschmelzen von aufgestäubtem Goldpulver oder dem Gold der Folie selbst die Gefahr, daß diese offenen Bereiche nicht einwandfrei geschlossen werden.

Der Erfindung liegt daher die Aufgabe zugrunde, die Dentalkappe der eingangs bezeichneten Art so auszubilden, daß beim Umbiegen der Lappen keine offenen Bereiche verbleiben und somit die Gefahr des Durchlaufens von aufgeschmolzenem Gold verhindert ist.

Diese Aufgabe wird erfindungsgemäß durch die im kennzeichnenden Teil des Patentanspruchs 1 angegebenen Maßnahmen gelöst.

Vorteilhafte Weiterbildungen sind aus den Unteransprüchen zu ersehen.

Die erfindungsgemäße Ausbildung unterscheidet sich in der Herstellbarkeit des zugeschnittenen Folienstücks von dem Zuschnitt der vorstehend erörterten anderweitig vorgeschlagenen Dentalkappe in Hinblick auf die Anforderungen an die Geschicklichkeit des Zahntechnikers in keiner Weise. Es ist lediglich erforderlich, die Einschnitte anderweitig, nämlich erfindungsgemäß, auszuführen. Die neue Art der Zuschnitte gewährleistet, daß beim ordnungsgemäßen Umbiegen der Lappen zur Bildung der Überlappungsbereiche im Seitenwandbereich der Kappe dort keinerlei Öffnungen vorgesehen sind, sondern sich die Lappen gegenseitig vollständig überlappen, so daß dort gewünschtenfalls auch eine doppelwandige Ausbildung möglich ist. Durch die erfindungsgemäße Gestaltung der Einschnitte wird im übrigen sichergestellt, daß der Ansatzpunkt der gegenseitigen Überlappung der Lappen in demjenigen Bereich der Kappe liegt, der der Occlusalfläche eines Zahnstumpfmodells zuzuordnen ist. Der an sich aus sich heraus nicht verschließbare Ansatzpunkt der gegenseitigen Überlappung der Lappen ist beim Aufschmelzen von Goldpulver oder beim Anschmelzen von Foliengold problemlos verschließbar, ohne daß das aufgeschmolzene Gold durch den Ansatzpunkt der Überlappung hindurchtritt und innenseitig der Kappe ein Hindernis für deren späteres Aufsetzen auf den Originalzahnstumpf bildet. Bedingt durch die auf die Einschnitte zurückgehende Lappenbildung müssen auch keine Vorprägungen für Faltlinien irgendwelcher Art vorgesehen werden. Die erfindungsgemäße Gestaltung wirkt sich also auch auf die Herstellung der Dentalkappe als solche weiter vereinfachend aus, da es ohne weiteres möglich ist, die Lappen in Richtung auf die Drehachse des Folienstücks umzubiegen und dabei zugleich die gegenseitige Überlappung der Lappen zu bewirken. Die solchermaßen gestaltete Dentalkappe muß nur auf ein Zahnstumpfmodell aufgesetzt werden und kann dann ohne weitere manuelle Zwischenarbeit zusammen mit dem Zahnstumpfmodell in einen Swager eingebracht werden, wo mit einem einzigen kräftigen Schlag in Axialrichtung des Zahnstumpfmodells die Dentalkappe zu der Gestalt verformbar ist, mit der sie zur gegenseitigen unlösbaren Fixierung der Lappen des Folienstücks einer Flamme ausgesetzt wird, um im Wege einer Goldverschmelzung eine in ihrer Seitenwandung in sich absolut geschlossene, äußerst stabile Dentalkappe zu erreichen, die dann für die anschließende Verblendung mit Porzellan oder Kunststoff zur Verfügung steht.

Es entfällt also infolge der erfindungsgemäßen Gestaltung praktisch jede besondere manuelle Arbeit des Zahntechnikers, und sind darüber hinaus keine besonderen Fähigkeiten des Zahntechnikers erforderlich, wodurch insgesamt die Arbeitszeit für die Herstellung der fertigen Dentalkappe erheblich reduziert wird, so daß die Herstellung einer fertigen Verbundkrone bei mindestens gleicher Qualität wie bisher erheblich preiswerter ist.

Auch ist jede Gefahr der Bildung von Querfalten während der Herstellung der Dentalkappe überwunden, so daß insoweit auch die Qualität einer unter Verwendung der erfindungsgemäßen Dentalkappe hergestellten Verbundkrone verbessert ist. Durch entsprechende Anordnung der Einschnitte, die infolge des gegenseitigen Aufeinandertreffens die Bildung eines Ausschnitts zur Folge haben, läßt sich im übrigen im Seitenwandbereich der fertigen Dentalkappe eine praktisch absolute Gleichmäßigkeit der Wandstärke erreichen.

Nachfolgend wird die erfindungsmäße Dentalkappe unter Bezugnahme auf die Zeichnung weiter ins Einzelne gehend beschrieben; in der Zeichnung zeigt:
Fig. 1 eine Draufsicht auf einen Zuschnitt eines ursprünglich im wesentlichen kreisförmigen Folienstücks zur Herstellung einer erfindungsgemäßen Dentalkappe mit vier Lappen und
Fig. 2 eine Draufsicht auf einen Zuschnitt eines Folienstücks zur Herstellung einer erfindungsgemäßen Dentalkappe mit nur zwei Lappen.

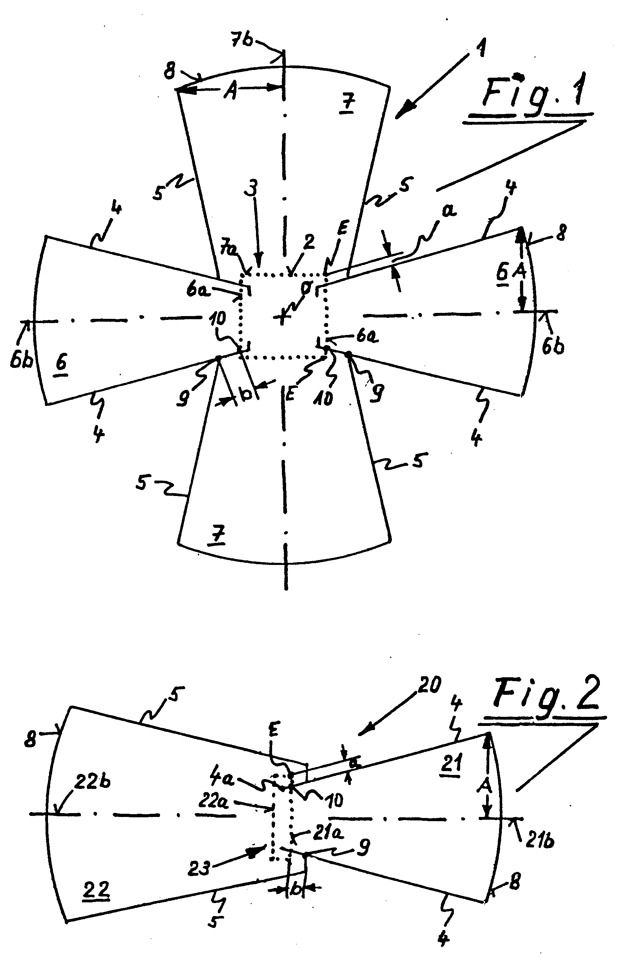

Fig. 1 zeigt in Draufsicht den Zuschnitt 1 zur Herstellung einer erfindungsgemäßen Dentalkappe. Im Zentrum des Zuschnitts 1 ist durch punktierte Linien 2 ein Quadrat 3 dargestellt, das in seiner Form in etwa derjenigen der Occlusalfläche eines zu überkronenden Zahnstumpfmodells entspricht. Zugleich ist das Quadrat 3 in seiner Größe etwas kleiner als die genannte Occlusalfläche.

Unter Bildung von insgesamt vier Einschnitten 4 und ebenfalls vier Einschnitten 5 sind zwei Paare einander diametral gegenüberliegender Lappen 6 bzw. 7 gebildet.

Dabei gehen die Einschnitte 4 und 5 jeweils vom Außenrand 8 des ursprünglich kreisförmigen Folienstücks aus. Die Einschnitte 4 für die Lappen 6 sind bis zu der jeweils zugehörigen Seitenlinie 6a des Quadrats 3 geführt und enden dort in einem kleinen Abstand a von der Ecke E des Quadrats 3. Zugleich beginnen die Einschnitte 4 am Außenrand 8 in einem Abstand A von der Mittelsenkrechten 6b der zugehörigen Seitenlinie 6a des Quadrats 3. Dieser Abstand A entspricht etwa der Länge der Seitenlinie 6a.

In analoger Weise beginnen die Einschnitte 5 ebenfalls in einem Abstand A von der Mittelsenkrechten 7b der Seitenlinie 7a des Quadrats 3. Die Einschnitte 5 enden jedoch auf den Einschnitten 4 (Auftreffpunkt 9), und zwar in einem Abstand b von dem Auftreffpunkt 10 der Einschnitte 4 auf den Seitenlinien 6a des Quadrats 3. Der Abstand b sollte etwa 3mm messen, jedoch nicht länger als die Seitenlinie sein.

In Fig. 1 ist zugleich eine Weiterbildungsvariante der erfindungsgemäßen Dentalkappe dargestellt, bei der die Einschnitte 4 über ihre Auftreffpunkte 10 hinaus in eigener Richtung und anschließend im wesentlichen parallel zu den zugehörigen Seitenlinien 6a des Quadrate 3 in Richtung auf die Mittelsenkrechte 6b verlängert sind. Beide Verlängerungsteile sind verhältnismäßig sehr klein und messen höchstens 2 mm; sie sind in der Regel in Hinblick auf die Länge der Seitenlinie zu bemessen und sollten 3/10 dieser Länge in etwa betragen.

Der Abstand a der Auftreffpunkte 10 der Einschnitte 4 von den Ecken E des Quadrate 3 sollte in der Regel 1/10 der Länge der Seitenlinie 6a des Quadrats 3, mindestens jedoch 0,5 mm und höchstens 1,5 mm messen.

Zur Bildung der kappenförmigen Gestalt werden zuerst die durch Einschnitte 4 gebildeten Lappen 6 in Richtung auf die Drehachse O des Folienstücks 1 umgebogen, und zwar um eine die Endpunkte ihrer Einschnitte 4 verbindende gedachte Linie. Anschließend werden die durch Einschnitte 5 gebildeten Lappen 7 in derselben Richtung umgebogen. Dabei überlappen die randseitigen Bereiche der Lappen 7 dann die randseitigen Bereiche der Lappen 6, wobei diese Überlappung mit zunehmendem Umbiegen der Lappen 6 und 7 immer größer wird. Die Überlappung beginnt dabei bereits an den Endpunkten 4a der Einschnitte 4. Zwar ist in dem Endpunkt 4a der Einschnitte 4 selbst noch keine Überlappung vorgesehen, weil überhaupt nicht möglich, jedoch bedeutet dies nichts Nachteiliges für die Dentalkappe, da diese punktförmig fehlende Überlappung im Bereich der Occlusalfläche liegt und leicht in der üblichen Weise durch Aufschmelzen von Goldpulver oder Anschmelzen des Foliengoldes geschlossen werden kann. Im gesamten Seitenbereich ist die Dentalkappe durch Überlappen ihrer Lappen 6 und 7 verschlossen.

Das Umbiegen und dichte Anlegen der Lappen 6 und 7 an ein Zahnstumpfmodell kann ohne weiteres in einem Swager ausgeführt werden, in dem das Modell praktisch als Amboß aufgenommen ist und in dem von oben mit einem heftigen Schlag ein elastischer Stempel mit einer zentralen Aussparung zur Aufnahme des Zahnstumpfmodells mit Dentalkappe auf dieses herunterführbar ist.

Selbstverständlich besteht durchaus die Möglichkeit, die Lappen 6 und 7 in jeweils identischer Weise zu gestalten, wobei sie dann hinsichtlich ihrer Mittelsenkrechten 6b bzw. 7b asymetrisch sind. In diesem Fall sieht die jeweils eine Hälfte der Lappen 6 bzw. 7 so aus wie in Fig. 1 dargestellt, während die jeweils andere Hälfte der Lappen 6 bzw. 7 der Hälfte der Lappen 7 bzw. 6 gemäß Darstellung in Fig. 1 entspricht. Dabei ist allerdings darauf zu achten, daß immer Einschnitte 4 und 5 einander abwechseln, was ja ohne weiteres möglich ist, da die entsprechende Gestaltung der beiden Hälften jedes Lappen in diesem Fall die Vorsehung eines Einschnitts 4 und eines Einschnitts 5 bei jedem Lappen erforderlich macht.

Fig. 2 zeigt in prinzipiell gleichartiger Darstellung zu Fig. 1 einen Folienzuschnitt 20 zur Verwendung bei einem Zahnstumpf mit ausgesprochen rechteckiger Gestalt, also beispielsweise bei einem Zahnstumpf eines Frontzahnes. In diesem Fall sind insgesamt nur zwei Lappen durch entsprechend gelegte Einschnitte auszubilden, wobei diese beiden Lappen 21 und 22 einander diametral gegenüberliegen und jeweils an den Langseiten 21a und 22a des Rechtecks 23 ansetzen.

Diese Ausführungsform entspricht der Ausführungsform gemäß Fig. 1, wenn man sich bei letzterer vorstellt, daß anstelle des einen Lappens 6 dem anderen Lappen 6 gegenüberliegend ein Lappen 7 vorgesehen ist, wenn im übrigen die beiden Lappen 7 entfallen sind und zugleich das Quadrat 3 durch Verkürzung der Seitenlinie 7a zu einem Rechteck 23 gemäß Fig. 2 verkleinert ist.

Bei der Ausführungsform der Fig. 2 sind die Einschnitte 4 nur in ihrer eigenen Richtung verlängert, nicht aber zugleich auch noch parallel zur zugehörigen Seitenlinie 21a des Rechtecks 23. Dennoch läßt sich auch hier ohne weiteres eine so vollständige gegenseitige Überlappung der Lappen 21 und 22 erreichen, daß die Überlappung schlimmstenfalls in den Endpunkten 4a der Einschnitte 4 fehlt, die im Bereich der Occclusalfläche des Zahnstumpfmodells liegen.

Durch die erfindungsgemäße Gestaltung ist eine Dentalkappe als Träger für eine Verblendung einer Verbundkrone erreicht, die eine erstaunlich hohe Formstabilität aufweist, deren Wandstärke absolut gleichmäßig und jederzeit reproduzierbar ist und die im übrigen insbesondere in Hinblick auf die Arbeitskosten aber auch in Hinblick auf die Materialkosten äußerst preiswert ist und insbesondere preiswerter als jede in Gießtechnik hergestellte Dentalkappe. Zugleich ist aber jegliche Gefahr einer fehlenden Überlappung im Seitenbereich der Kappe überwunden.

Als Verblendungsmaterialien kommen selbstverständlich neben Porzellen die üblicherweise in der Dentalkeramik verwendeten Kunststoffe in Betracht.

Die gegenseitige Fixierung der Lappen 4 und 6 bzw. 21 und 22 in ihren Überlappungsbereichen kann statt im Wege der Goldverschmelzung auch im Wege des Kaltverschweißens erfolgen, das im übrigen gelegentlich sogar gleichzeitig mit dem Umbiegen der Lappen in Richtung auf die Drehachse des Folienstücks ausgeführt werden kann.

## Patentansprüche

1. Dentalkappe aus einer Edelmetallfolie, insbesondere einer Edelmetall-Verbundfolie, in im wesentlichen kegelstumpfförmiger Gestalt, zur Verwendung als Träger für die Verblendung einer Verbundkrone, mit, ausgehend von einem etwa kreisförmigen Folienstück,
a) einem die Kappenoberseite bildenden inneren Bereich (3, 23), und
b) einem äußeren Bereich des Folienstücks,
c) wobei die Kappe durch Umbiegen des äußeren Bereichs entlang der Kanten des inneren Bereiches in Richtung auf die Drehachse des Folienstücks unter Ausbildung von Überlappungen gebildet ist, und
d) wobei die Überlappungsbereiche miteinander unlösbar verbunden sind,
**dadurch gekennzeichnet**, daß
e) der äußere Bereich des Folienstücks in mindestens zwei flügelförmige Lappen (6, 7; 21, 22) unterteilt ist, die sich im umgebogenen Zustand der Kappe gegenseitig überlappen,
f) die Kanten des inneren Bereiches ein Rechteck (23) bzw. Quadrat (3) bilden, welches der Form der Occlusalfläche eines zu überkronenden Zahnstumpfmodells entspricht und höchstens gleich groß wie diese Fläche ist,
g) zur Bildung der flügelförmigen Lappen (6, 7, 21, 22) im äußeren Bereich des Folienstücks (1) auf von dessen Außenrand (8) in Richtung des Rechtecks (23) bzw. Quadrats (3) verlaufenden Einschnittlinien Einschnitte (4, 5) erster und zweiter Art ausgeführt sind,
h) die Einschnittlinien für die Einschnitte (4) erster Art zur Bildung eines ersten Lappens (6, 21) in einem kleinen Abstand (a) von der benachbarten Ecke (E) des Rechtecks (23) bzw. Quadrats (3) auf dessen Seitenlinie (6a, 21a) auftreffen,
i) die Einschnittlinien für die Einschnitte (5) zweiter Art zur Bildung eines weiteren Lappens (7; 22) in einem deutlichen Abstand (b) von dem Auftreffpunkt (10) der Einschnittlinie für den Einschnitt (4) erster Art auf die Rechteck- bzw. Quadrat-Seitenlinie (6a, 21a) in Richtung auf den Außenrand (8) des Folienstücks (1) auf die Einschnittlinie für den Einschnitt (4) erster Art treffen,
j) die Einschnittlinien für die Einschnitte (4, 5) erster und zweiter Art am Außenrand (8) des Folienstücks (1) in einem solchen Abstand (A) von der Mittelsenkrechten (6b, 7b, 21b, 22b) der zum jeweiligen Lappen (6, 7, 21, 22) gehörigen Rechteck- bzw. Quadrat-Seitenlinie (6a, 7a, 21a, 22a) beginnen, der etwa so groß ist wie die Länge der genannten Seitenlinie (6a, 7a, 21a, 22a), und daß
k) die einzelnen Lappen (6, 7, 21, 22) in Richtung auf die Drehachse (0) des Folienstücks (1) um eine die beiden Endpunkte (4a, 9) ihrer Einschnitte (4, 5) miteinander verbindende Linie umgebogen sind.

2. Dentalkappe nach Anspruch 1, dadurch gekennzeichnet, daß der kleine Abstand (a) des Auftreffpunktes (10) des genannten ersten Einschnitts (4) des ersten Lappens (6) von der benachbarten Ecke (E) der zugehörigen Seitenlinie (6a) des Rechtecks bzw. Quadrats (3) etwa 1/10 der Länge der genannten Seitenlinie (6a), jedoch mindestens 0,5 mm und höchstens 1,5 mm mißt.

3. Dentalkappe nach Anspruch 1, dadurch gekennzeichnet, daß der deutliche Abstand (b) des Auftreffpunktes (9) des zweiten Einschnitts (5) von dem ersten Auftreffpunkt (10) höchstens der Länge der genannten Seitenlinie (6a) entspricht, jedoch mindestens 3 mm mißt.

4. Dentalkappe nach Anspruch 1, dadurch gekennzeichnet, daß insgesamt vier Lappen (6,7) durch Einschnitte (4,5) gebildet sind, wobei die jeweils einander diametral gegenüberliegenden Lappen in Form und Größe gleich ausgebildet sind.

5. Dentalkappe nach Anspruch 1, dadurch gekennzeichnet, daS die Einschnitte (4) der erstgenannten Art über ihren Auftreffpunkt (10) auf der zugehörigen Seitenlinie (6a) des Rechtecks bzw. Quadrats (3) hinaus verlängert ist, und zwar zunächst in eigener Richtung und dann weiter im wesentlichen parallel zu der genannten Seitenlinie (6a) und je zu tewa 3/10 der Länge derselben, höchstens aber je um 2 mm.

6. Dentalkappe nach Anspruch 4 oder 5, dadurch gekennzeichnet, daß zuerst diejenigen einander diametral gegenüberliegenden Lappen (6) in Richtung auf die Drehachse (0) des Folienstücks (1) umgebogen sind, die durch Einschnitte (4) der erstgenannten Art gebildet sind, während die beiden einander diametral gegenüberliegenden Lappen (7), die durch Einschnitte (5) der zweitgenannten Art gebildet sind, erst anschließend in derselben Richtung umgebogen sind.

7. Dentalkappe nach Anspruch 1, dadurch gekennzeichnet, daß insgesamt vier Lappen (6,7) durch Einschnitte (4,5) gebildet sind, wobei diese Lappen (6,7) zu der Mittelsenkrechten (6b,7b) der zum jeweiligen Lappen (6,7) gehörigen Rechteck- bzw. Quadrat-Seitenlinie (6b,7b) asymetrisch sind und eine Hälfte jedes Lappens (6,7) durch einen Einschnitt (4) der erstgenannten Art und die zweite Hälfte jedes Lappens (6,7) durch einen Einschnitt (5) der zweitgenannten Art gebildet sind, wobei die Einschnitte (4,5) so ausgeführt sind, daß stets Einschnitte (4) der erstgenannten Art mit Einschnitten (5) der zweitgenannten Art abwechseln.

8. Dentalkappe nach Anspruch 7, dadurch gekennzeichnet, daß jeder Lappen (6,7) zuerst mit seiner durch einen Einschnitt (4) der erstgenannten Art gebildeten Hälfte in Richtung auf die Drehachse (0) des Folienstücks (1) umgebogen ist, während die jeweils durch Einschnitte (5) der zweitgenannten Art gebildete zweite Hälfte aller Lappen (6,7) erst anschließend in derselben Richtung umgebogen ist.

9. Dentalkappe nach Anspruch 1, dadurch gekennzeichnet, daß insgesamt nur zwei Lappen (21,22) vorgesehen sind, die einander diametral gegenüberliegen, wobei der eine Lappen (21) zu beiden Seiten durch einen Einschnitt (4) der erstgenannten Art und der zweite Lappen (22) zu beiden Seiten durch einen Einschnitt (5) der zweitgenannten Art gebildet ist.

10. Dentalkappe nach Anspruch 9, dadurch gekennzeichnet, daß zuerst der durch Einschnitte (4) der erstgenannten Art gebildete Lappen (21) in Richtung auf die Drehachse (0) des Folienstücks (20) umgebogen ist und erst anschließend der durch Einschnitte (5) der zweitgenannten Art gebildete Lappen (22).

11. Dentalkappe nach Anspruch 1, dadurch gekennzeichnet, daß insgesamt nur zwei Lappen (21,22) vorgesehen sind, die einander diametral gegenüberliegen, wobei diese Lappen (21,22) zu der Mittelsenkrechten (21b,22b) der zum jeweiligen Lappen (21,22) gehörigen Rechteck- bzw. Quadrat-Seitenlinie (21a, 22a) asymetrisch sind und die eine Hälfte jedes Lappens (21,22) durch einen Einschnitt (4) der erstgenannten Art und die zweite Hälfte jedes Lappens (21,22) durch einen Einschnitt (5) der zweitgenannten Art gebildet sind, wobei die Einschnitte (4,5) so ausgeführt sind, daß stets Einschnitte (4) der erstgenannten Art mit Einschnitten (5) der zweitgenannten Art abwechseln.

12. Dentalkappe nach Anspruch 11, dadurch gekennzeichnet, daß jeder Lappen (21,22) zuerst mit seiner durch einen Einschnitt (4) der erstgenannten Art gebildeten Hälfte in Richtung auf die Drehachse (0) des Folienstücks (20) umgebogen ist, während die jeweils durch Einschnitte (5) der zweitgenannten Art gebildete zweite Hälfte aller Lappen (21,22) erst anschließend in derselben Richtung umgebogen ist.

## Claims

1. A dental cap consisting of a noble metal foil, especially a noble metal composite foil in substantially frusto-conical shape for use as a carrier for the veneer of a composite jacket crown comprising, starting from a substantially circular piece of foil,
a) an inner region (2, 23) forming the top side of the cap and
b) an outer region of the foil piece,
c) the cap being formed by folding over the outer region along the edges of the inner region in the direction towards the axis of rotation of the foil piece to form mutual overlappings and
d) the overlapping regions being joined undetachably,
**characterised in that**
e) the outer region of the foil piece is divided into at least two wing-shaped flaps (6, 7, 21, 22) which overlap when the cap is in the folded state,
f) the edges of the inner region form a rectangle (23) or square (3) which corresponds to the shape of the occlusal face of a tooth stump model to be crowned and has at most the same magnitude as said face,
g) cuts (4, 5) of a first and second type are made in the outer region of the foil piece (1) along cutting lines extending from the outer edge (8) of the foil piece in the direction of the rectangle (23) or square (3), respectively, for forming the wing-shaped flaps (6, 7, 21, 22),
h) the cutting lines for the cuts (4) of the first type for forming a first flap (6, 21) meet the sideline (6a, 21a) of the rectangle (23) or square (3) at a small distance (a) from the adjacent corner (E) thereof,
i) the cutting lines for the cuts (5) of the second type for forming an additional flap (7, 22) meet the cutting line for the cut (4) of the first type at an appreciable distance (b) from the meeting point (10) of the cutting line for the cut (4) of the first type with the sideline (6a, 21a) of the rectangle or square, respectively, in the direction towards the outer edge (8) of the foil piece (1),
j) the cutting lines for the cuts (4, 5) of the first and second type on the outer edge (8) of the foil piece (1) begin at such a distance (A) from the mid-perpendicular (6b, 7b, 21b, 22b) of the sideline (6a, 7a, 21a, 22a) of the rectangle or square pertaining to the relevant flap (6, 7, 21, 22), which distance has about the same magnitude as the length of the above-mentioned sideline (6a, 7a, 21a, 22a), and that
k) the individual flaps (6, 7, 21, 22) in the direction towards the rotational axis (0) of the foil piece (1) are folded around a line connecting the two end points (4a, 9) of their cuts (4, 5).

2. A dental cap according to claim 1, charaterized in that the small distance (a) of the meeting point (10) of said first cut (4) of the first flap (6) from the adjacent corner (E) of the associated side line (6a) of the rectangle or square (3) is about 1/10 of the length of said side line (6a) but at least 0.5 mm and at most 1.5 mm.

3. A dental cap according to claim 1, characterized in that the appreciable distance (b) of the meeting point (9) of the second cut (5) from the first meeting point (10) corresponds at the most to the length of said side line (6a) but is at least 3 mm.

4. A dental cap according to claim 1, characterized in that a total of four flaps (6, 7) are formed by cuts (4,5) pairs of diametrically opposite flaps being made identical in shape and size.

5. A dental cap according to claim 1, charcterized in that the cuts (4) of the first type are extended beyond their meeting point (10) with the associated side line (6a) of the rectangle or square (3), namely firstly in their original direction and then further substantially parallel to said side line (6a) and each by about 3/10 of th length thereof, at the most, however, by 2 mm.

6. A dental cap according to claim 4 or claim 5, characterized in that firstly the diametrically opposite flaps (6) formed by cuts (4) of the first type are folded over in the direction towards the axis of rotation (0) of the foil piece (1) whilst the two diametrically opposite flaps (7) formed by cuts (5) of the second type are only thereafter folded over in the same direction.

7. A dental cap according to claim 1, characterized in that a total of four flaps (6,7) are made by cuts (4,5), said flaps (6,7) being asymmetrical with respect to the centre perpendicular of the rectangle or square side lines (6b, 7b) belonging to the respective flaps, one half of each flap (6, 7) being formed by a cut (4) of the first type and the second half of each flap (6, 7) being formed by a cut (5) of the second type, the cuts (4, 5) being made such that cuts (4) of the first type alsways alternate with cuts (5) of the second type.

8. A dental clap according to claim 7, characterized in that each flap (6, 7) is first folded over in the direction towards the axis of rotation (0) of the foil piece (1) with its half formed by a cut (4) of the first type, whilst the second half of all flaps (6, 7) formed in each case by cuts of the second type is only thereafter folded over in the same direction.

9. A dental cap according to claim 1, characterized in that a total of only two flaps (21, 22) are provided which are diametrically opposed, the one flap (21) being formed on both sides by a cut (4) of the first type and the second flap (22) being formed on both sides by a cut (5) of the second type.

10. A dental cap according to claim 9, characterized in that firstly the flap (21) formed by cuts (4) of the first type is folded in the direction towards the axis of rotation (0) of the foil piece (20) and only thereafter the flap (22) formed by cuts (5) of the second type is folded over.

11. A dental cap according to claim 1, characterized in that a total of only two flaps (21, 22) are provided which are diametrically opposed, said flaps (21, 22) being asymmetrical with respect to the centre perpendicular (21b, 22b) of the rectangle or square side line (21a, 22a) belonging to the respective flap, one half of each flap (21, 22) being formed by a cut (4) of the first type and the second half of each flap (21, 22) being formed by a cut (5) of the second type, the cuts (4, 5) being made such that cuts (4) of the first type always alternate with cuts (5) of the second type.

12. A dental cap according to claim 11, characterized in that each flap (21, 22) is first folded in the direction of the axis of rotation (0) of the foil piece (20) with its half formed by a cut (4) of the first type, whilst the second half of all flaps (21, 22) formed in each case by cuts of the second type is only thereafter folded over in the same direction.

## Revendications

1. Capuchon dentaire constitué d'une feuille de métal précieux, en particulier d'une feuille de métal précieux composite, et présentant une forme sensiblement tronconique, pour l'utilisation comme support du revêtement d'une couronne composée, comprenant, en partant d'un morceau de feuille sensiblement circulaire,
a) une partie intérieure (3, 23) qui forme la surface supérieure du capuchon, et
b) une partie extérieure du morceau de feuille,
c) le capuchon étant formé par pliage de la partie extérieure le long des bords de la partie intérieure en direction de l'axe de rotation du morceau de feuille, avec réalisation de recouvrements, et
d) les zones de recouvrement étant solidarisées les unes avec les autres,
caractérisé en ce que
e) la partie extérieure du morceau de feuille est divisée en au moins deux pattes (6, 7, 21, 22) en forme d'ailettes qui, à l'état replié du capuchon, se recouvrent mutuellement,
f) les bords de la partie intérieure forment un rectangle (23) et respectivement un carré (3) qui correspond à la forme de la surface occlusive d'un modèle de chicot auquel doit être adaptée une couronne et qui présente au plus les mêmes dimensions que ladite surface,
g) pour la formation des pattes (6, 7, 21, 22) en forme d'ailettes, des entailles (4, 5) d'un premier et d'un second type sont réalisées dans la partie extérieure du morceau de feuille (1), sur des lignes d'incision qui s'étendent du bord extérieur (8) dudit morceau de feuille en direction du rectangle (23) et respectivement du carré (3),
h) pour la formation d'une première patte (6, 21), les lignes d'incision pour les entailles (4) du premier type rencontrent, à une faible distance (a) du coin (E) voisin du rectangle (23) ou du carré (3), la ligne latérale (6a, 21a) de celui-ci,
i) pour la formation d'une autre patte (7, 22), les lignes d'incision pour les entailles (5) du second type rencontrent la ligne d'incision pour l'entaille (4) du second type à une distance marquée (b) du point de rencontre (10) de la ligne d'incision pour l'entaille (4) du premier type avec la ligne latérale (6a, 21a) du rectangle ou du carré, en direction du bord extérieur (8) du morceau de feuille (1),
j) les lignes d'incision pour les entailles (4, 5) du premier et du second type commencent au bord extérieur (8) du morceau de feuille (1) à une distance (A) des médiatrices (6b, 7b, 21b, 22b) de la ligne latérale (6a, 7a, 21a, 22a) du rectangle ou carré associée à chaque patte (6, 7, 21, 22), qui est sensiblement égale à la longueur de ladite ligne latérale (6a, 7a, 21a, 22a), et que
k) les différentes pattes (6, 7, 21, 22) sont repliées en direction de l'axe de rotation (O) du morceau de feuille (1) autour d'une ligne qui relie les deux points d'extrémité (4a, 9) de leurs entailles (4, 5).

2. Capuchon dentaire selon la revendication 1, caractérisé en ce que la faible distance (a) entre le point de rencontre (10) de ladite première entaille (4) de la première patte (6) et le coin (E) voisin de la ligne latérale (6a) associée du rectangle ou carré (3) est d'environ 1/10 de la longueur de ladite ligne latérale (6a), mais au minimum de 0,5 mm et au maximum de 1,5 mm.

3. Capuchon dentaire selon la revendication 1, caractérisé en ce que la distance marquée (b) entre le point de rencontre (9) de la seconde entaille (5) et le premier point de rencontre (10) correspond au plus à la longueur de ladite ligne latérale (6a), mais mesure au minimum 3 mm.

4. Capuchon dentaire selon la revendication 1, caractérisé en ce qu'au moins quatre pattes (6,7) sont formées par des entailles (4, 5), les pattes respectivement diamétralement opposées présentant une forme et une grandeur identiques.

5. Capuchon dentaire selon la revendication 1, caractérisé en ce que les entailles (4) du premier type sont prolongées au-delà de leur point de rencontre (10) sur la ligne latérale (6a) associée du rectangle ou du carré (3), et cela tout d'abord dans leur propre direction, puis sensiblement parallèlement à ladite ligne latérale (6a) et à chaque fois d'environ 3/10 de la longueur de celle-ci, mais au maximum de 2 mm.

6. Capuchon dentaire selon l'une des revendications 4 ou 5, caractérisé en ce que les pattes (6) diamétralement opposées et formées par des entailles (4) du premier type sont pliées en premier en direction de l'axe de rotation (0) du morceau de feuille (1), tandis que les deux pattes (7) diamétralement opposées et formées par des entailles (5) du second type ne sont pliées qu'ensuite dans la même direction.

7. Capuchon dentaire selon la revendication 1, caractérisé en ce que les entailles (4, 5) forment au total quatre pattes (6, 7), lesdites pattes (6, 7) étant asymétriques par rapport à la médiatrice (6b, 7b) de la ligne latérale (6b, 7b) associée à la patte (6, 7) considérée, et que la moitié de chaque patte (6, 7) est formée par une entaille (4) du premier type et la seconde moitié de chaque patte (6, 7), par une entaille (5) du second type, les entailles (4, 5) étant réalisées de telle façon que des entailles (4) du premier type alternent toujours avec des entailles (5) du second type.

8. Capuchon dentaire selon la revendication 7, caractérisé en ce que chaque patte (6, 7) est pliée tout d'abord avec sa moitié formée par une entaille (4) du premier type en direction de l'axe de rotation (0) du morceau de feuille (1), tandis que la seconde moitié de toutes les pattes (6,7) formée respectivement par des entailles (5) du second type, ne sont pliées qu'ensuite dans la même direction.

9. Capuchon dentaire selon la revendication 1, caractérisé en ce qu'il ne comprend au total que deux pattes (21, 22) diamétralement opposées, l'une des pattes (21) étant formée des deux côtés par une entaille (4) du premier type, alors que la seconde patte (22) est formée des deux côtés par une entaille (5) du second type.

10. Capuchon dentaire selon la revendication 9, caractérisé en ce que la patte (21) formée par des entailles (4) du premier type est pliée en premier en direction de l'axe de rotation (0) du morceau de feuille (20), et que la patte (22) formée par des entailles (5) du second type n'est pliée qu'ensuite.

11. Capuchon dentaire selon la revendication 1, caractérisé en ce qu'il ne comprend au total que deux pattes (21, 22) diamétralement opposées, lesdites pattes (21, 22) étant asymétriques par rapport à la médiatrice (21b, 22b) de la ligne latérale (21a, 22a) du rectangle ou du carré associée à la patte (21, 22) considérée, et que l'une des moitiés de chaque patte (21, 22) est formée par une entaille (4) du premier type, et la seconde moitié de chaque patte (21, 22), par une entaille (5) du second type, les entailles (4, 5) étant réalisées de telle façon que des entaille (4) du premier type alternent toujours avec des entailles (5) du second type.

12. Capuchon dentaire selon la revendication 11, caractérisé en ce que chaque patte (21, 22) est pliée tout d'abord avec sa moitié formée par une entaille (4) du premier type, en direction de l'axe de rotation (0) du morceau de feuille (20), alors que la seconde moitié de toutes les pattes (21, 22) formées par des entailles (5) du second type n'est pliée qu'ensuite dans la même direction.
